# DEMANDE DE BREVET EUROPEEN

(11) **EP 1 667 125 A1**
(43) Date de publication de la demande: **07.06.2006**
(21) Numéro de dépôt: 05111647.3
(22) Date de dépôt: 02.12.2005
(51) Int. Cl.: G11B 7/005, G11B 20/10, G11B 7/12, G11B 7/085, G11B 20/14

(54) **Dispositif de lecture/écriture de disques numériques**

(30) Priorité: 03.12.2004 FR 0452859
(71) Demandeur: ST MICROELECTRONICS S.A., 92120 Montrouge (FR)
(72) Inventeur: Bertholom, Cédric, 38470 Vinay (FR); Goiran, Jean-Michel, 38330 Saint Ismier (FR)
(74) Mandataire: de Beaumont, Michel

(57) **Abrégé**

L'invention concerne un dispositif de lecture et/ou d'écriture d'un disque tournant comprenant un dispositif optoélectromécanique (100) mobile placé au-dessus du disque et relié à une carte mère (200) par l'intermédiaire d'un ensemble de fils électriques. Le dispositif optoélectromécanique comprend des actionneurs (101), une diode laser (102), des photodétecteurs (103) et un circuit électronique (104), chaque photodétecteur fournissant au circuit électronique un signal électrique analogique proportionnel au signal lumineux reçu, le circuit électronique commandant la diode et les actionneurs. Le circuit électronique comprend un convertisseur (105) numérisant les signaux provenant des photodétecteurs et transmettant les signaux numérisés à un module de traitement numérique (106) fournissant des informations de positionnement (@, Δ) du dispositif optoélectromécanique par rapport au disque, et un signal d'horloge de référence (Ck) dont la période correspond sensiblement à un multiple ou à un sous-multiple de la durée correspondant au survol par le dispositif optoélectromécanique d'un bit du disque.

## Description

### Domaine de l'invention

La présente invention concerne un dispositif de lecture et/ou d'écriture de disques de stockage de données numériques permettant de lire et/ou d'écrire de façon optique. Ces disques sont par exemple des "CD", "DVD", "Blueray" ou "HD-DVD".

### Exposé de l'art antérieur

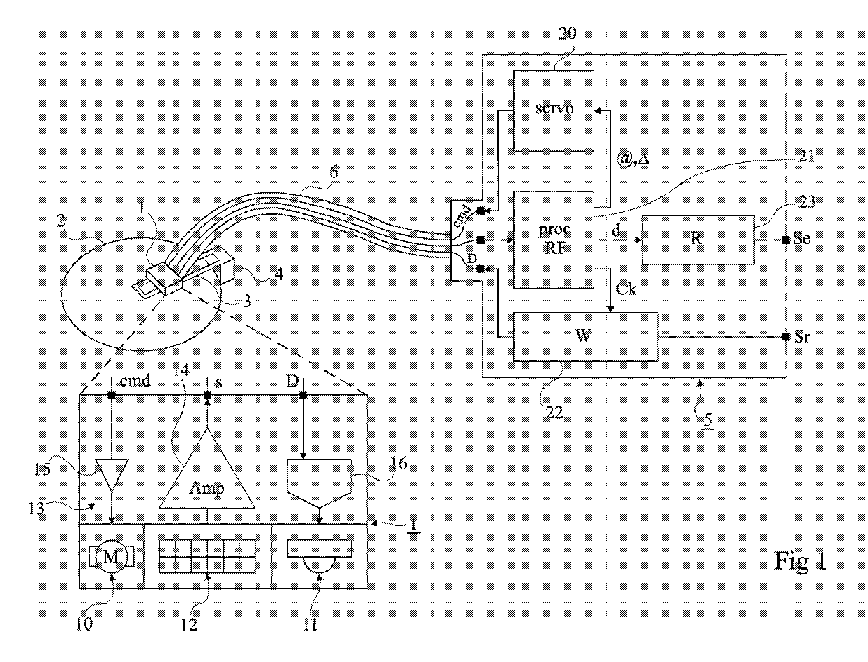

La figure 1 est un schéma connu d'un tel dispositif. Un dispositif optoélectromécanique mobile 1 est placé au-dessus d'un disque 2 sur un support 3 constitué de deux rails horizontaux tenus d'un côté par un pied 4 posé à côté du disque 2. Le dispositif optoélectromécanique 1 est relié à une carte mère 5 par un ensemble de fils électriques placés sur une bande souple 6.

La composition du dispositif optoélectromécanique est représentée schématiquement en bas à gauche de la figure. Des actionneurs 10 permettent de déplacer le dispositif 1 sur les rails du support 3. Une diode laser 11 émet de la lumière afin de lire ou d'écrire le disque. Un capteur d'images 12 constitué d'une matrice de photodétecteurs mesure en continu l'intensité de la lumière réfléchie par le disque. Chaque photodétecteur du capteur d'images 12 fournit un signal électrique analogique dont l'intensité est sensiblement proportionnelle à l'intensité de la lumière reçue par ce photodétecteur. Les actionneurs 10, la diode laser 11 et le capteur d'images 12 sont reliés à un circuit électronique 13 comprenant les éléments suivants. Un amplificateur 14 amplifie les signaux électriques analogiques fournis par chacun des photodétecteurs du capteur d'images 12 et les transmet à la carte mère 5 sous la forme d'un ensemble de signaux analogiques s. Un amplificateur 15 reçoit des signaux de commande cmd émis par la carte mère et après amplification les transmet aux actionneurs 10. Un dispositif de régulation/amplification 16 commande l'intensité lumineuse de la diode laser 11, l'intensité lumineuse étant faible ou variable selon que l'on effectue une lecture ou une écriture. Lors d'une phase d'écriture, le dispositif de régulation/amplification 16 reçoit un signal de données numériques D et fait varier l'intensité lumineuse de la diode laser 11 en fonction du type de bit à écrire, l'intensité étant par exemple élevée pour écrire un "1", et faible pour écrire un "0", l'écriture d'un bit à "1" entraînant une modification de la nature de la portion de piste correspondant à ce bit et notamment une modification de ses caractéristiques réfléchissantes.

La carte mère reçoit ou fournit des signaux audiovisuels à destination ou en provenance d'un appareil tel qu'une télévision ou une chaîne audio, et échange avec le dispositif optoélectromécanique 1 les signaux cmd, s et D précédemment cités. De façon générale, la carte mère 5 est un circuit imprimé sur lequel sont placés un ou plusieurs circuits intégrés. D'un point de vue fonctionnel, la carte mère peut être découpée en quatre modules principaux. Un module "servo" 20 fournit des signaux de commande cmd aux actionneurs 10. Un module de traitement (proc RF) 21 traite les signaux analogiques s provenant du capteur d'images 12. Le module de traitement 21 fournit un signal de données d à un module de lecture R 23 qui fournit un signal audiovisuel Se après démodulation et décodage. Un module d'écriture W reçoit un signal audiovisuel Sr et effectue un codage et une modulation de ce signal, le signal codé et modulé étant envoyé vers le dispositif optoélectromécanique 1 sous la forme d'un signal de données numériques D à écrire sur le disque 2.

Le module de traitement 21 analyse les images fournies par le capteur 12 afin de détecter quatre éléments principaux. Cette analyse est effectuée de façon "analogique" avec des moyens de calcul, et notamment de sommation et de soustraction, travaillant à partir de signaux analogiques. Les deux premiers éléments fournis concernent le positionnement du dispositif optoélectromécanique 1 par rapport au disque 2. Ce sont une information d'adresse @ indiquant la zone du disque au-dessus de laquelle se trouve le dispositif 1, et une information d'erreur Δ de positionnement du dispositif 1 par rapport à la piste du disque suivie, c'est-à-dire trop décalé de la piste latéralement ou encore trop près ou trop éloigné de la piste de sorte que le point lumineux formé sur le disque n'est pas parfaitement net. Ces informations analogiques de positionnement @ et Δ sont transmises au module servo 20 qui les analyse et fournit en retour des signaux de commande cmd au dispositif optoélectromécanique afin de repositionner correctement le dispositif 1 si nécessaire. Un autre élément fourni par le module de traitement 21 est un signal analogique d de données lues qui est démodulé et décodé par le module de lecture R. Le dernier élément fourni par le module de traitement 21 est un signal d'horloge de référence Ck connu sous le nom anglais de "wobble". La période de cette horloge de référence Ck correspond sensiblement à un multiple ou à un sous-multiple de la durée de passage sous le capteur d'une portion du disque correspondant à un bit lorsque le disque est en rotation, ou autrement dit, de la durée de survol par le capteur d'images d'un bit de données inscrit sur le disque 2. Le signal d'horloge de référence Ck est transmis au module d'écriture W qui émet un signal de données numériques D à écrire avec une cadence correspondant à la fréquence du signal d'horloge de référence Ck.

Avec l'augmentation des vitesses de lecture et d'écriture de disques, on observe de plus en plus de défaillances du dispositif précédemment décrit. Ces défaillances apparaissent notamment dans les dispositifs utilisant les technologies les plus modernes connues sous le nom anglais de "blue ray". Les défaillances rencontrées sont principalement des erreurs d'écriture.

### Résumé de l'invention

Un objet de la présente invention est de prévoir un dispositif de lecture et/ou d'écriture de disques qui soit fonctionnel quelle que soit la vitesse d'écriture ou de lecture.

Un autre objet de la présente invention est de prévoir un tel dispositif de structure simple.

Pour atteindre ces objets, la présente invention prévoit un dispositif de lecture et/ou d'écriture d'un disque tournant comprenant un dispositif optoélectromécanique mobile placé au-dessus du disque et relié à une carte mère par l'intermédiaire d'un ensemble de fils électriques. Le dispositif optoélectromécanique comprend des actionneurs, une diode laser, des photodétecteurs et un circuit électronique, chaque photodétecteur fournissant au circuit électronique un signal électrique analogique proportionnel au signal lumineux reçu, le circuit électronique commandant la diode et les actionneurs. Le circuit électronique comprend un convertisseur analogique-numérique numérisant les signaux électriques analogiques provenant des photodétecteurs et transmettant les signaux numérisés à un module de traitement numérique fournissant des informations de positionnement du dispositif optoélectromécanique par rapport au disque, et un signal d'horloge de référence dont la période correspond sensiblement à un multiple ou à un sous-multiple de la durée correspondant au survol par le dispositif optoélectromécanique d'un bit du disque.

Selon un mode de réalisation de l'invention, le circuit électronique comprend en outre un module de synchronisation recevant ledit signal d'horloge de référence et un signal de données numériques à écrire provenant de la carte mère et fournissant un signal de données numériques synchronisé à destination de la diode laser.

Selon un mode de réalisation de l'invention, lors d'une phase d'écriture, le module de traitement numérique fournit un signal de données numériques correspondant aux données inscrites sur le disque.

Selon un mode de réalisation de l'invention, lesdites informations de positionnement sont une adresse indiquant la zone du disque au-dessus de laquelle se trouve le dispositif optoélectromécanique et des informations d'erreurs de positionnement par rapport à la piste du disque suivie.

Selon un mode de réalisation de l'invention, lesdites informations de positionnement sont transmises en série par un desdits fils électriques à un module servo placé sur la carte mère, le module servo analysant ces informations de positionnement et fournissant en retour des commandes à destination des actionneurs du dispositif optoélectromécanique.

Selon un mode de réalisation de l'invention, le circuit électronique du dispositif optoélectromécanique comprend en outre un module de groupement de commandes recevant des commandes "principales" provenant du module servo de la carte mère et des commandes "d'ajustement" fournies par le module de traitement, le module de groupement de commandes commandant les actionneurs.

Selon un mode de réalisation de l'invention, les signaux de données numériques lues et à écrire transitent par l'intermédiaire de deux interfaces placées sur la carte mère et sur le circuit optoélectromécanique, les deux interfaces étant reliées par un desdits fils électriques, les interfaces assurant le passage dans un sens ou dans l'autre d'un signal de données numériques.

Selon un mode de réalisation de l'invention, la carte mère comprend un module de lecture qui émet un signal audio et/ou visuel après démodulation et décodage du signal de données numériques fourni par le dispositif optoélectromécanique et transmis par l'intermédiaire d'un desdits fils électriques.

Selon un mode de réalisation de l'invention, la carte mère comprend un module d'écriture recevant un signal audio et/ou visuel et effectuant un codage et une modulation de ce signal pour fournir ledit signal de données numériques à écrire.

Selon un mode de réalisation de l'invention, le circuit électronique du dispositif optoélectromécanique comprend des moyens de démodulation du signal de données numériques fourni par le module de traitement et des moyens de modulation du signal de données numériques à écrire provenant de la carte mère.

La présente invention prévoit également un circuit électronique destiné à commander une diode laser et des actionneurs d'un dispositif optoélectromécanique mobile placé au-dessus d'un disque et recevant des signaux électriques analogiques fournis par un ensemble de photodétecteurs du dispositif optoélectromécanique. Le circuit comprend un convertisseur analogique-numérique numérisant les signaux électriques analogiques provenant des photodétecteurs et un module de traitement numérique recevant des signaux numérisés dudit convertisseur et fournissant des informations de positionnement du dispositif optoélectromécanique par rapport au disque et un signal d'horloge de référence dont la période correspond sensiblement à un multiple ou à un sous-multiple de la durée correspondant au survol par le dispositif optoélectromécanique d'un bit du disque.

La présente invention prévoit également un lecteur et/ou un enregistreur de disques numériques sur support optique, par exemple au format "CD", "DVD", "Blueray" ou "HD-DVD", comprenant un dispositif tel que défini précédemment.

### Brève description des dessins

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 est un schéma, précédemment décrit, d'un dispositif de lecture et/ou d'écriture de disques connu ; et
la figure 2 est un schéma d'un dispositif de lecture et/ou d'écriture de disques selon la présente invention.

### Description détaillée

Dans le dispositif décrit précédemment en relation avec la figure 1, les inventeurs ont détecté des problèmes de couplages capacitifs parasites entre les signaux transitant sur les fils électriques de la bande souple notamment lors d'une phase d'écriture. Un signal de données numériques D transite dans un sens, de la carte mère 5 vers le dispositif optoélectromécanique 1, et des signaux analogiques s transitent dans l'autre sens, du dispositif 1 vers la carte mère 5. Le signal de données numériques D présente une fréquence de l'ordre de 500 MHz à 1 GHz et l'amplitude de son excursion de tension est de l'ordre de 1 volt. Les signaux électriques analogiques s ont quant à eux un spectre de fréquence allant jusqu'à 100 MHz et leur excursion de tension maximale est bien plus faible, de l'ordre de quelques centaines de mV. Par couplage capacitif parasite, les variations de tension importantes et rapides du signal de données numériques D induisent des variations de tension sur les signaux analogiques s pouvant atteindre 40 à 50 mV. Le rapport signal sur bruit du signal analogique s est extrêmement faible. L'analyse des signaux analogiques s parasités par le module de traitement donne des informations de positionnement @ et Δ qui sont erronées. Ceci engendre au final un mauvais positionnement de la diode laser au-dessus du disque. De plus, le signal d'horloge de référence Ck fourni par le module de traitement 21 se trouve lui aussi parasité. Par conséquent, la synchronisation du signal de données numériques D à écrire n'est pas correcte et ceci conduit à des erreurs d'écriture.

Ainsi, un couplage capacitif parasite entraîne une diminution du rapport signal sur bruit des signaux analogiques transmis et par conséquent une génération incorrecte de signaux de commande de positionnement et de synchronisation des données à écrire.

Un moyen de diminuer le couplage parasite entre les fils électriques reliant la carte mère et le dispositif électromécanique consiste à améliorer l'isolement électrique des fils. Pour ce faire, on peut les écarter les uns des autres ou prévoir deux bandes souples, les signaux transitant du dispositif vers la carte mère étant placés sur une bande et les signaux transitant dans l'autre sens étant placés sur l'autre bande. Cependant, ceci nécessite d'utiliser une bande souple plus large ou plusieurs bandes souples, ce qui est plus coûteux et plus encombrant.

Un moyen d'augmenter le rapport signal sur bruit du signal analogique s provenant du capteur d'images est d'augmenter l'amplitude des variations de tension de ce signal au moyen d'un amplificateur 14 plus puissant. Cependant, une telle solution présente plusieurs inconvénients. L'énergie électrique consommée est beaucoup plus importante. De plus, l'augmentation de l'excursion des signaux analogiques fait apparaître des phénomènes d'écrêtage et de distorsion.

Afin de remédier à ces défaillances, la présente invention prévoit d'effectuer un traitement des signaux analogiques fournis par le capteur d'images au moyen d'un dispositif "numérique" placé sur le dispositif optoélectromécanique. Ce dispositif numérique est constitué d'un convertisseur analogique/numérique et d'un module de traitement numérique. La numérisation des signaux fournis par le capteur d'images et leur traitement numérique entraîne une légère baisse de qualité de traitement par rapport à un traitement "analogique" tel que celui effectué par le module de traitement 21 du dispositif décrit précédemment en relation à la figure 1. Cependant, pour une fonctionnalité sensiblement identique, un module de traitement numérique est beaucoup plus compact et nécessite beaucoup moins d'énergie qu'un module de traitement "analogique". Un module de traitement numérique peut par conséquent être avantageusement placé dans le circuit électronique placé sur le dispositif optoélectromécanique. Le circuit de traitement numérique fournit uniquement des signaux numériques relativement basse fréquence. Les signaux numériques étant beaucoup moins sensibles aux couplages capacitifs parasites entre les fils électriques de la bande souple, ceci permet au final de compenser largement la différence de qualité entre un module de traitement analogique et un module de traitement numérique, comme cela apparaîtra ci-après.

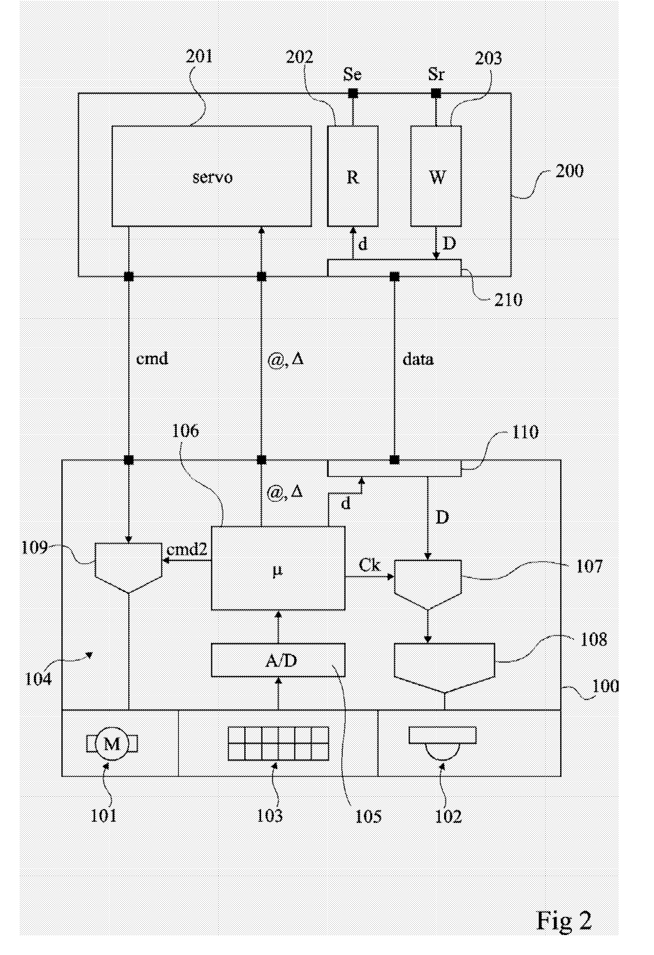

La figure 2 est un schéma d'un dispositif de lecture et/ou d'écriture de disques selon la présente invention. Le dispositif comprend un dispositif optoélectromécanique 100 et une carte mère 200 reliés par un ensemble de fils électriques placés sur une bande souple non représentée. Comme précédemment, le dispositif optoélectromécanique 100 comprend des actionneurs 101, une diode laser 102 et un capteur d'images 103, tous trois reliés à un circuit électronique 104. Le dispositif optoélectromécanique 100 est comme précédemment placé sur des rails au-dessus d'un disque, le disque tournant lors d'une lecture ou d'une écriture.

Selon un aspect de la présente invention, les signaux électriques analogiques fournis par chacun des photodétecteurs du capteur d'images 103 sont numérisés par un convertisseur analogique/numérique 105 puis transmis à un module de traitement numérique 106 qui délivre un ensemble de signaux numériques. Le module de traitement 106 fournit des informations de positionnement, c'est-à-dire une adresse @ indiquant la zone du disque au-dessus de laquelle se trouve le dispositif 100, et des informations d'erreurs Δ de positionnement par rapport à la piste du disque suivie. De plus, le module de traitement 106 fournit un signal d'horloge de référence Ck. Une période de ce signal d'horloge de référence Ck correspond à un multiple ou à un sous multiple de la durée de survol par le capteur d'images 103 d'une portion de piste du disque tournant placé sous le dispositif 100 correspondant à un bit d'information. En outre, lors d'une lecture, le module de traitement 106 fournit un signal de données numériques d indiquant les informations inscrites sur le disque.

Dans le mode de réalisation décrit en figure 2, les informations de positionnement @ et Δ sont transmises à un module servo 201 de la carte mère 200. Dans cet exemple de réalisation de la présente invention, les informations de positionnement sont transmises en série sur un unique fil électrique. Le module servo 201 analyse les informations de positionnement et fournit en retour un signal de commande cmd destiné aux actionneurs 101 du dispositif 100.

De plus, lors d'une lecture, le signal de données numériques d fourni par le module de traitement 106 est transmis à un module de lecture R 202 de la carte mère 200 par l'intermédiaire de deux interfaces 110 et 210 placées respectivement sur le dispositif optoélectromécanique 100 et sur la carte mère 200. Le module de lecture 202 démodule et décode le signal de données numériques d reçu et émet en sortie un signal audiovisuel Se.

Par ailleurs, la carte mère 200 comprend un module d'écriture 203 pouvant recevoir un signal audiovisuel Sr. Lors d'une phase d'écriture, le module d'écriture 203 code et module le signal reçu Sr avant de l'envoyer sous la forme d'un signal de données numériques D vers le dispositif optoélectromécanique 100 par l'intermédiaire des deux interfaces 110 et 210. Un module de synchronisation 107 placé sur le dispositif 100 reçoit le signal de données numériques D à écrire ainsi que le signal d'horloge de référence Ck provenant du module de traitement 106 et fournit un signal de données synchronisées à un module de régulation/amplification 108 qui fournit un signal de commande d'écriture adéquat à la diode laser 108 sous la forme d'une série de niveaux de courant, le niveau de courant étant fonction de la valeur à écrire, l'écriture d'un "1" nécessitant par exemple une intensité élevée.

Dans le mode de réalisation représenté en figure 2, le module servo 201 de la carte mère 200 transmet uniquement des commandes de positionnement principales, les commandes "d'ajustement" de placement au-dessus d'une piste étant fournies directement par le module de traitement 106. Un module de groupement de commandes 109 reçoit les commandes cmd provenant du module servo 201 et des commandes cmd2 provenant du module de traitement 106 et après synthèse commande les actionneurs 101.

De plus, dans le dispositif représenté en figure 2, les interfaces 110 et 210 sont reliées l'une à l'autre par un unique fil sur lequel transite soit le signal de données numériques d lu, soit le signal de données numériques D à écrire. L'utilisation d'un unique fil électrique pour transmettre des données dans un sens ou dans l'autre permet de réduire le nombre de fils de la bande souple reliant le dispositif et la carte mère et par conséquent permet de réduire la taille et le coût de la bande souple.

Dans le dispositif selon la présente invention, les informations de positionnement @ et Δ fournies par le module de traitement sont des signaux numériques basse fréquence. La sensibilité de ces signaux aux couplages capacitifs parasites est faible contrairement aux signaux analogiques transmis dans le dispositif connu représenté en figure 1.

De plus, le fait que le dispositif optoélectromécanique ne transmette que des signaux numériques permet avantageusement de prévoir des systèmes de multiplexage afin de sérialiser les informations, commandes ou données à transmettre et par conséquent de pouvoir utiliser un nombre réduit de fils électriques sur la bande souple reliant le dispositif optoélectromécanique et la carte mère.

En outre, le fait d'effectuer la synchronisation des données à écrire dans le dispositif optoélectromécanique grâce à l'utilisation directe de l'horloge de référence Ck par le module de synchronisation 107 permet de supprimer complètement les problèmes de synchronisation du signal de données numériques à écrire.

Un avantage du dispositif selon la présente invention est que contrairement au dispositif connu décrit en relation à la figure 1, il fonctionne avec des fréquences élevées de lecture ou d'écriture.

Bien entendu, la présente invention est susceptible de diverses variantes et modifications qui apparaîtront à l'homme de l'art. En particulier, on pourra prévoir d'effectuer la modulation et la démodulation des signaux de données numériques sur le circuit électronique placé sur le dispositif optoélectromécanique. Ceci permet de diminuer la fréquence des signaux numériques transitant entre la carte mère et le dispositif optoélectromécanique et par conséquent de les rendre moins sensibles aux couplages capacitifs parasites.

De plus, le module de traitement numérique placé sur le dispositif optoélectromécanique peut être prévu programmable de façon à adapter ses fonctions de traitement au type de disque, à la vitesse de lecture et/ou d'écriture ou à d'autres paramètres.

En outre, on peut prévoir d'inclure dans le circuit électronique placé dans le dispositif optoélectromécanique un module de régulation de l'intensité lumineuse de la diode laser dans les phases d'écriture. Un tel module de régulation analyse les signaux lumineux reçus par le capteur d'images afin de détecter si la réflectivité des bits écrits à "0" ou à "1" est correcte. Si tel n'est pas le cas, alors ce dispositif de régulation commande le module de régulation/amplification afin qu'il modifie les niveaux de courant de la diode laser.

Par ailleurs, le dispositif de la présente invention peut s'appliquer à la lecture ou à l'écriture d'un signal uniquement audio ou uniquement visuel.

De plus, le circuit électronique du dispositif optoélectromécanique peut être composé de plusieurs circuits intégrés pouvant être placés dans un même boîtier.

En outre, un dispositif de lecture et/ou d'écriture selon la présente invention peut être placé dans divers équipements tels qu'un ordinateur, un lecteur et/ou un enregistreur de CD ou de DVD à usage privé.

## Revendications

1. Dispositif de lecture et/ou d'écriture d'un disque tournant comprenant un dispositif optoélectromécanique (100) mobile placé au-dessus du disque et relié à une carte mère (200) par l'intermédiaire d'un ensemble de fils électriques, le dispositif optoélectromécanique comprenant des actionneurs (101), une diode laser (102), des photodétecteurs (103) et un circuit électronique (104) commandant la diode et les actionneurs, chaque photodétecteur fournissant à un convertisseur analoqigue-numérique (105) du circuit électronique un signal électrique analogique proportionnel au signal lumineux reçu, **caractérisé en ce que** le circuit électronique comprend un module de traitement numérique (106) recevant des signaux numérisés par le convertisseur analogique-numérique et fournissant des informations de positionnement (@, Δ) du dispositif optoélectromécanique par rapport au disque, et un signal d'horloge de référence (Ck) dont la période correspond sensiblement à un multiple ou à un sous-multiple de la durée correspondant au survol par le dispositif optoélectromécanique d'un bit du disque, le circuit électronique comprenant en outre un module de synchronisation (107) recevant ledit signal d'horloge de référence et pouvant recevoir un signal de données numériques (D) à écrire provenant de la carte mère et fournissant, lors d'une phase d'écriture, un signal de données numériques synchronisé à destination de la diode laser.

2. Dispositif selon la revendication 1, dans lequel lors d'une phase de lecture, le module de traitement numérique (106) fournit un signal de données numériques (d) correspondant aux données inscrites sur le disque.

3. Dispositif selon la revendication 1, dans lequel lesdites informations de positionnement sont une adresse (@) indiquant la zone du disque au-dessus de laquelle se trouve le dispositif optoélectromécanique et des informations d'erreurs (Δ) de positionnement par rapport à la piste du disque suivie.

4. Dispositif selon la revendication 1, dans lequel lesdites informations de positionnement (@, Δ) sont transmises en série par un desdits fils électriques à un module servo (201) placé sur la carte mère (200), le module servo analysant ces informations de positionnement et fournissant en retour des commandes (cmd) à destination des actionneurs (101) du dispositif optoélectromécanique (100).

5. Dispositif selon la revendication 4, dans lequel le circuit électronique (104) du dispositif optoélectromécanique (100) comprend en outre un module de groupement de commandes (109) recevant des commandes "principales" (cmd) provenant du module servo de la carte mère et des commandes "d'ajustement" (cmd2) fournies par le module de traitement (106), le module de groupement de commandes commandant les actionneurs (101).

6. Dispositif selon les revendications 1 et 2, dans lequel les signaux de données numériques lues (d) et à écrire (D) transitent par l'intermédiaire de deux interfaces (110, 210) placées sur la carte mère (200) et sur le circuit optoélectromécanique (100), les deux interfaces étant reliées par un desdits fils électriques, les interfaces assurant le passage dans un sens ou dans l'autre d'un signal de données numériques.

7. Dispositif selon la revendication 2, dans lequel la carte mère (200) comprend un module de lecture (R) qui émet un signal audio et/ou visuel (Se) après démodulation et décodage du signal de données numériques (d) fourni par le dispositif optoélectromécanique et transmis par l'intermédiaire d'un desdits fils électriques.

8. Dispositif selon la revendication 1, dans lequel la carte mère (200) comprend un module d'écriture (W) recevant un signal audio et/ou visuel (Sr) et effectuant un codage et une modulation de ce signal pour fournir ledit signal de données numériques à écrire.

9. Dispositif selon les revendications 1 et 2, dans lequel le circuit électronique du dispositif optoélectromécanique comprend des moyens de démodulation du signal de données numériques (d) fourni par le module de traitement (106) et des moyens de modulation du signal de données numériques à écrire (D) provenant de la carte mère (200).

10. Circuit électronique destiné à commander une diode laser (102) et des actionneurs (101) d'un dispositif optoélectromécanique mobile (100) placé au-dessus d'un disque et recevant des signaux électriques analogiques fournis par un ensemble de photodétecteurs (103) du dispositif optoélectromécanique, **caractérisé en ce qu'**il comprend :
un convertisseur analogique-numérique (105) numérisant les signaux électriques analogiques provenant des photodétecteurs ;
un module de traitement numérique (106) recevant des signaux numérisés dudit convertisseur et fournissant des informations de positionnement (@, Δ) du dispositif optoélectromécanique par rapport au disque et un signal d'horloge de référence (Ck) dont la période correspond sensiblement à un multiple ou à un sous-multiple de la durée correspondant au survol par le dispositif optoélectromécanique d'un bit du disque ; et
un module de synchronisation (107) recevant ledit signal d'horloge de référence et pouvant recevoir un signal de données numériques (D) à écrire et pouvant fournir un signal de données numériques synchronisé à destination de la diode laser.

11. Lecteur et/ou enregistreur de disques numériques sur support optique, par exemple au format "CD", "DVD", "Blueray" ou "HD-DVD", comprenant un dispositif selon l'une quelconque des revendications 1 à 9.
